# EUROPEAN PATENT APPLICATION

(11) **EP 4 113 817 A1**
(43) Date of publication of application: **04.01.2023**
(21) Application number: 21768051.1
(22) Date of filing: 01.03.2021
(51) Int. Cl.: H02M 3/335

(54) **POWER SUPPLY CIRCUIT AND CHARGING DEVICE**

(30) Priority: 12.03.2020 CN 202010172167
(71) Applicant: GUANGDONG OPPO MOBILE TELECOMMUNICATIONS CORP., LTD., Dongguan, Guangdong 523860 (CN)
(72) Inventor: JIANG, Senlong, Dongguan, Guangdong 523860 (CN); CHIU, Chih-wei, Dongguan, Guangdong 523860 (CN); ZHANG, Jialiang, Dongguan, Guangdong 523860 (CN); TIAN, Chen, Dongguan, Guangdong 523860 (CN); ZHANG, Jun, Dongguan, Guangdong 523860 (CN)
(74) Representative: Manitz Finsterwald Patent- und Rechtsanwaltspartnerschaft mbB
(86) International application number: PCT/CN2021/078540
(87) International publication number: WO 2021/179939

(57) **Abstract**

a power supply circuit and a charging device are provided. A power supply circuit includes a rectifier circuit, configured to convert an alternating current inputted to the rectifier circuit into a direct current; a primary power supply conversion circuit having an input end connected with an output end of the rectifier circuit, configured to convert an input voltage of the primary power supply conversion circuit out of a preset voltage range into an output voltage of the primary power supply conversion circuit within the preset voltage range; a secondary power supply conversion circuit having an input end connected with an output end of the primary power supply conversion circuit, configured to convert a direct current voltage outputted by the primary power supply conversion circuit into a target direct current voltage; wherein, a lower limit of the preset voltage range is greater than a minimum working voltage of the secondary power supply conversion circuit. The disclosure can improve the stability of the output power supply of the charging device.

## Description

### CROSS REFERENCE

The application claims the priority of the Chinese patent application filed on march 12, 2020, the application number of the Chinese patent application is 202010172167.1 and the application name of the Chinese patent application is "Power supply circuit and charging device", the whole content of the Chinese patent application is incorporated into this document by reference.

### FIELD OF DISCLOSURE

The invention relates to the field of charging, in particular to a power supply circuit and a charging device.

### BACKGROUND

The charging device needs to convert AC power into DC power during operation in order to supply DC power to the device to be charged. However, with the development of charging technology, charging device is required to have different levels of voltage output capacity. For example, if a charging device charges a mobile phone that supports the PD protocol, the output voltage of charging device is continuously adjustable DC. In this case, it is usually necessary to configure the electric energy conversion circuit in the charging device to further transform the rectified DC, so that the charging device has the ability to adjust the output voltage.

However, the DC power is unstable and fluctuates widely after rectification, the stability of power conversion circuit is greatly affected. It is not conducive to the stability of the output power of charging device.

The above-mentioned information disclosed in the background technology section is only used to enhance the understanding of the background of the present disclosure, so it may include information that does not be regarded as a prior art known to a person of ordinary skill in the art.

### SUMMARY OF DISCLOSURE

The present disclosure is related to improve the stability of the output electric energy of the charging device. In order to solve the above technical problem, the present disclosure adopts the following technical solutions.

The disclosure relates to a power supply circuit, the power supply circuit comprising a rectifier circuit, configured to convert an alternating current inputted to the rectifier circuit into a direct current; a primary power supply conversion circuit comprising an input end connected with an output end of the rectifier circuit, configured to convert an input voltage of the primary power supply conversion circuit out of a preset voltage range into an output voltage of the primary power supply conversion circuit within the preset voltage range; a secondary power supply conversion circuit comprising an input end connected with an output end of the primary power supply conversion circuit, configured to convert a direct current voltage outputted by the primary power supply conversion circuit into a target direct current voltage; wherein, a lower limit of the preset voltage range is greater than a minimum working voltage of the secondary power supply conversion circuit.

The disclosure further relates to a charging device the charging device includes a power access port, and a power supply circuit, the power access port is configured to access AC power, the output end of the secondary power conversion circuit of the power supply circuit for the device to be charged to connect.

The technical solution of the present disclosure is to adjust the output voltage of the rectifier circuit within the preset voltage range if the output voltage of the rectifier circuit out of the preset voltage range, so as to effectively reduce or eliminate the working dead zone of the secondary power supply conversion circuit, so that the secondary power conversion can obtain enough voltage supply at every moment, and then the secondary power conversion circuit can output continuous and stable voltage to charge electronic device.

Moreover, the technical solution of the disclosure can also realize the miniaturization of the charging device. Compared with setting the filter circuit behind the rectifier circuit to smooth the output voltage of the rectifier circuit, the filter circuit needs to use the inductance with larger inductance value and the capacitor with larger capacitor value, so the volume of inductance and capacitor in the filter circuit is larger. In the present disclosure, a power conversion circuit is configured to adjust the output voltage of the rectifier circuit. Due to the circuit structure of the power conversion circuit, inductance with smaller inductance value and capacitor with smaller capacitor value can be used, which is conducive to reducing the volume of inductance and capacitor, and to reducing the volume of charging device;

To sum up, the technical scheme of the disclosure can improve the stability of the output electric energy of the power supply circuit.

It should be understood that the above general description and the following detailed description are only illustrative and do not limit the present disclosure.

### BRIEF DESCRIPTION OF DRAWINGS

The above and other objects, features, and advantages of the present disclosure will become more apparent by describing in detail its exemplary embodiments with reference to the accompanying drawings.
FIG. 1 illustrates a circuit structure block diagram of a power supply circuit in an embodiment of the present disclosure.
Fig. 2 illustrates a schematic diagram of a power supply circuit in an embodiment of the present disclosure.
Fig. 3 illustrates a preset voltage range of the output waveform of the rectifier circuit in an embodiment of the present disclosure.
Fig. 4 illustrates a preset voltage range of the output waveform of the rectifier circuit in another embodiment of the present disclosure.
Fig. 5 illustrates a circuit diagram of a power supply circuit if the primary power conversion circuit only includes a BUCK unit in an embodiment of the present disclosure.
Fig. 6 illustrates a circuit diagram of a power supply circuit if the primary power conversion circuit includes a BOOST unit and a BUCK unit in an embodiment of the present disclosure.
Fig. 7 illustrates a circuit diagram of a power supply circuit in an embodiment of the present disclosure according to the example in Figure 6.
Fig. 8 illustrates a circuit diagram of a power supply circuit in another embodiment of the present disclosure according to the example in Figure 6.
Fig. 9 illustrates a circuit diagram of a power supply circuit if the primary power conversion circuit includes a BOOST unit and a BUCK unit in an embodiment of the present disclosure.

### DETAILED DESCRIPTION

The embodiments will be described more fully with reference to the accompanying drawings. However, the embodiments can be implemented in a variety of forms and should not be construed as limited to the embodiments set forth herein. The embodiments are provided so that this disclosure will be thorough and complete and will fully convey the concepts of embodiments to those skilled in the art. The drawings are illustrative illustrations of the present disclosure only and are not necessarily drawn to scale. The same reference numerals in the drawings denote the same or similar parts, and thus repeated description thereof will be omitted.

In addition, the features, structures, or characteristics described may be combined in one or more embodiments in any suitable manner. In the following description, numerous specific details are provided to give a full understanding of the embodiments of the present disclosure. However, those skilled in the art will appreciate that one or more of the specific details may be practiced without practicing the technical solutions of the present disclosure, and other methods, components, devices, steps, and the like may be employed. In other instances, well-known structures, methods, devices, implementations, materials, or operations are not shown or described in detail to avoid obscuring aspects of the present disclosure.

In this disclosure, unless otherwise expressly specified and qualified, the terms "install", "join", "connect", "fix" and other terms should be understood in a broad sense, for example, it can be understood that objects may be fixedly connected, may be detachably connected or connected as a whole; it can be mechanically connected, it can be electrically connected or it can communicate with each other; it can be directly connected, or it can be connected indirectly through an intermediate medium; it can be a connection within two elements or the interaction relationship between two elements. For those of ordinary skill in the art, the specific meaning of the above terms in the present disclosure may be understood on a case-by-case basis.

Furthermore, the terms such as "first" and "second" are used only for describing purpose and should not to be interpreted as the indication to the relative importance or to amount of the technical characteristics. Thus, the characteristics of the "first" and "second" are configured to express or indicate to one or more features. In the description of the present disclosure, the meaning of "multiple" is at least two, such as two, three, etc., unless other specific limiting is presented.

The following embodiments of the present disclosure are further elaborated in detail in conjunction with the accompanying drawings of the present specification.

The present disclosure provides a power supply circuit and a charging device. The charging device may be an adapter, etc., for supplying power to an electronic device. The electronic device can be an intelligent terminal or a mobile terminal equipped with a battery power supply system. The electronic device may also include, but is not limited to, a portable computer, a mobile phone, an e-book reader, an intelligent wearable device, a mobile power supply (such as an external battery pack and a travel charge), an electronic cigarette, a wireless mouse, a wireless keyboard, a wireless headset, a Bluetooth speaker and other rechargeable electronic devices with charging functions.

The charging device includes a power access port and a power circuit. The power access port is configured to access AC power. The charging device converts the AC power supply into the charging voltage allowed or required by the electronic device, or the charging device converts the AC power supply into the charging current allowed or required by the electronic device, or the charging device converts the AC power supply into the charging voltage and charging current allowed or required by the electronic device.

The charging device can work in a voltage following mode, that is, the adapter communicates with the electronic device to be charged in two-way. The adapter adjusts its output voltage and current according to the required charging voltage and current feedback from the electronic device, so that the output voltage and current can be directly loaded on the battery of the electronic device to charge the battery, there is no need to adjust the charging current and voltage of the electronic device again.

The charging modes of the battery of electronic device are "ordinary charging mode" and "fast charging mode". The normal charging mode means that the adapter outputs small current value (usually less than 2.5A) or uses small power (usually less than 15W) to charge the battery in the charging device. In normal charging mode, it usually takes several hours to fully charge a large capacity battery (such as a 3000 MAH battery). Fast charging mode means that the adapter can output large current (usually greater than 2.5A, such as 4.5A, 5A or higher) or a high power (usually greater than or equal to 15W) to charge the battery in the charging device. Compared with the normal charging mode, the charging speed of the adapter in the fast charging mode is faster, and the charging time required to fully fill the battery with the same capacity can be significantly shortened.

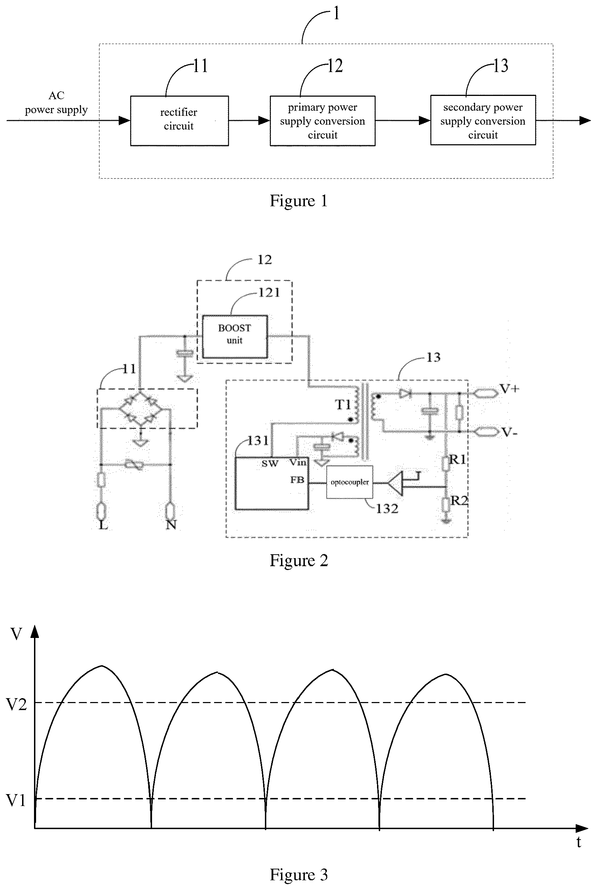

FIG. 1 illustrates a circuit structure block diagram of a power supply circuit 1 in an embodiment of the present disclosure. The disclosure relates to a power supply circuit 1, the power supply circuit 1 is installed inside the charging device. The power supply circuit 1 comprises a rectifier circuit 11, a primary power supply conversion circuit 12 and a secondary power supply conversion circuit 13. The input end of the rectifier circuit 11 is connected with the AC power supply to rectify the AC power supply. The input end of the primary power supply conversion circuit 12 is connected with the output end of the rectifier circuit 11. The primary power supply conversion circuit 12 is configured to adjust the output voltage of the rectifier circuit 11 to the preset voltage range if the output voltage of the rectifier circuit 11 exceeds the preset voltage range. The secondary power supply conversion circuit 13 is connected with the output end of the primary power conversion, it is configured to convert the DC voltage output by the primary power supply conversion circuit 12 into the target DC current, where the lower limit value V2 of the preset voltage range is greater than the minimum working voltage of the secondary power supply conversion circuit 13.

FIG. 2 illustrates a circuit diagram of a power supply circuit 1 in a embodiment of the present disclosure. In at least one embodiment of the present disclosure, the input end of the AC power are L and N. The output ends of the secondary power supply conversion circuit 13 are V +, V -. The rectifier circuit 11 can be a diode rectifier circuit 11, and the full bridge and half bridge rectifier circuit 11 carry out full wave rectification for the AC power supply from L and N ends. According to the different conducting devices selected, the rectifier circuit 11 can be an uncontrollable rectifier circuit 11, a half controlled rectifier circuit 11, and a fully controlled rectifier circuit 11. In the uncontrollable rectifying circuit 11, a plurality of uncontrollable rectifying diodes are configured to complete the rectification. The rectifier consists of a half controlled diode and a controlled rectifier. In the fully controlled rectifier circuit 11, all the rectifying elements are controllable (MOS switch, SCR, GTR, GTO, etc.), and the average value and polarity of the output DC voltage of the full controlled rectifier circuit 11 can be adjusted by controlling the conduction status of the elements.

In at least one embodiment of the present disclosure, the diode rectifier circuit 11 can be set. The rectifier diodes in the full bridge and half bridge rectifier circuit 11 are replaced by MOS switch to reduce the loss of electric energy in the rectifier circuit 11. Under the same input power, the output voltage of the rectifier circuit 11 is raised.

The DC power generated by the AC power after the treatment of the rectifier circuit 11 is approximately a continuous steamed bread wave. In at least one embodiment of the present disclosure, the frequency of the steamed bread wave is about 100Hz. The power supply circuit 1 includes two levels of power conversion circuit: a primary power supply conversion circuit 12 and a secondary power supply conversion circuit 13. The primary power supply conversion circuit 12 is configured to process the steamed bread wave electric energy output by the rectification circuit 11, so as to process the steamed bread wave electric energy into the DC electric energy with relatively stable voltage.

If the output voltage of rectifier circuit 11 out of the preset voltage range, the primary power supply conversion circuit 12 adjusts the output voltage of rectifier circuit 11 to the preset voltage range. Among them, the lower limit value V2 of the preset voltage range is greater than the minimum working voltage of the secondary power supply conversion circuit 13. Therefore, through the processing of the primary power supply conversion circuit 12, the working dead zone of the secondary power supply conversion circuit 13 can be eliminated, so as to ensure the normal operation of the secondary power supply conversion circuit 13.

In order to understand the cooperation process of the primary power supply conversion circuit 12 and the secondary power supply conversion circuit 13 more easily, the implementation example of the secondary power supply conversion circuit 13 is explained.

As illustrated in FIG. 2, the secondary power supply conversion circuit 13 includes a power transformer T1, an AC-DC power management chip 131, and a feedback circuit. The AC-DC power management chip 131 has switch control end SW, feedback end FB and power supply end Vin. The first end of the primary winding of the power transformer T1 is connected with the output end of the primary power supply conversion circuit 12. The second end of the primary winding is connected with the switch control end SW of the AC-DC power management chip 131. The input end of the feedback circuit is connected with the primary winding or secondary winding of the power transformer T1, and the output end of the feedback circuit is connected with the feedback end FB of the AC-DC power management chip 131. A winding can be isolated from the primary side of the power transformer T1 and connected with the VIN of the power supply terminal of the AC-DC power management chip 131, and it supplies power to AC-DC power management chip 131.

In at least one embodiment of the present disclosure, the AC-DC power management chip 131 integrates a switch tube which is electrically connected with the primary winding of the power transformer T1 and a driving circuit to drive the switch on and off by controlling the on or off of the switch tube, the timing of power transmission from T1 primary winding to secondary winding is controlled. The switching frequency is more than 100k, therefore, the voltage on the primary coil of the power transformer T1 presents a pulse square wave through the fast switching of the switch tube. The output voltage of T1 secondary winding of power transformer is constant. The specific voltage value is determined by the frequency of output signal of SW end on AC-DC power management chip 131. In at least one embodiment of the present disclosure, the switch tube may also exist independently of the AC-DC power management chip 131.

The feedback circuit is configured to establish feedback between the transformer T1 winding voltage and AC-DC power management chip 131, so that the AC-DC power management chip 131 can adjust the switching frequency of the switch tube, so as to stabilize the secondary output voltage. In an embodiment of the present disclosure, a separate winding is provided as a feedback winding on the primary coil side of transformer T1, and the feedback winding obtains feedback through a separate winding and outputs a switching waveform modulation. In another embodiment of the present disclosure, a resistor is configured to divide the voltage at the secondary output, and a voltage feedback signal is passed back through the comparator, resistor R1, and resistor R2 with optocoupler 132.

It can be understood that he secondary power conversion circuit 13 can use not only the above-mentioned scheme with power transformer T1, but also other types of DC-DC converter circuits, such as charge pump circuits.

The following will explain the embodiment of the primary power supply conversion circuit 12 in combination with the above-mentioned embodiment.

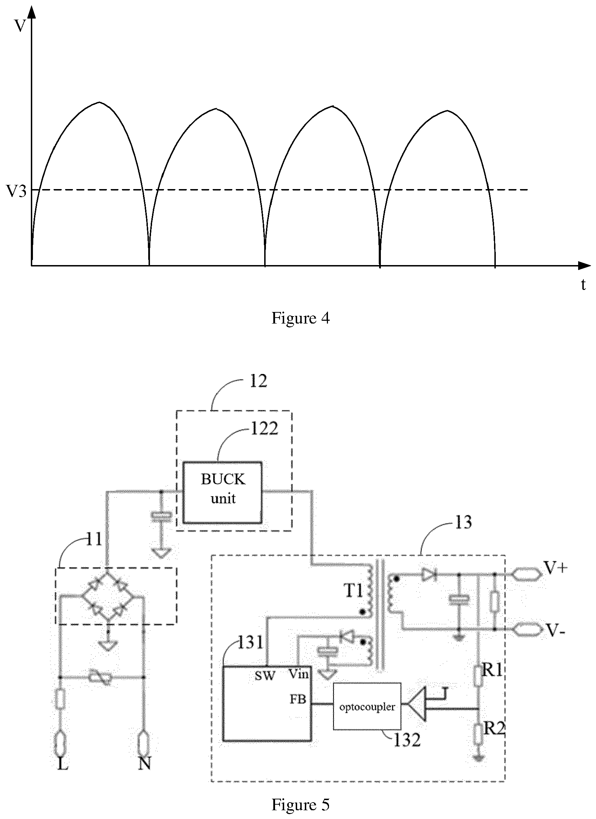

Fig. 3 illustrates a preset voltage range of the output waveform of the rectifier circuit in an embodiment of the present disclosure. Fig. 4 illustrates a preset voltage range of the output waveform of the rectifier circuit in another embodiment of the present disclosure. The preset voltage range has the upper limit value V1 and the lower limit value V2. The voltage difference between the upper limit value V1 and the lower limit value V2 determines the size of the preset voltage range. In FIG. 3, the upper limit value V1 and the lower limit value V2 of the preset voltage range are different, and there is an obvious voltage difference between the upper limit value V1 and the lower limit value V2. The voltage of the first power conversion circuit outside the preset voltage range is adjusted to within the preset voltage range to meet the operation of the second power conversion circuit. In Fig. 4, the upper limit value V1 and the lower limit value V2 of the preset voltage range are set to be the same or nearly the same, in this case, the preset voltage range can be regarded as a specific preset voltage V3. Therefore, it is necessary for the first power conversion circuit to convert the band different from the preset voltage value into the preset voltage V3. Obviously, the setting of the preset voltage range in Fig. 4 can make the output voltage of the primary power supply conversion circuit 12 more stable. Thus, the secondary power supply conversion circuit 13 can obtain stable and continuous power supply. And through the specific preset voltage V3 is set in the range of the best working voltage of the secondary power supply conversion circuit 13, it can make the secondary power supply conversion circuit 13 work in the best state in each period, so as to improve the working efficiency and quality of the secondary power supply conversion circuit 13. In the following examples, the expressions of the upper limit value V1 and the lower limit value V2 of the preset voltage are still described in conjunction with the relevant embodiments for ease of understanding.

It can be seen from the above embodiment that the voltage waveform output by rectifier circuit 11 is roughly steamed bread wave, the voltage amplitude varies between the highest voltage and the lowest voltage, and the lowest voltage may be nearly 0V. It can be understood that if the output voltage of rectifier circuit 11 is nearly 0V, the primary winding of transformer T1 cannot be started, which makes the secondary output of transformer T1 unstable.

Continue to refer to FIG. 2, in at least one embodiment of the present disclosure, the primary power supply conversion circuit 12 includes a BOOST unit for increasing the output voltage of the rectifier circuit 11 if the output voltage of the rectifier circuit 11 is less than or equal to the lower limit value V2 of the preset voltage range, wherein, the lower limit value V2 of the preset voltage range is greater than the minimum working voltage of the secondary power supply conversion circuit 13.

It can be understood that according to the different secondary power supply conversion circuit 13, the minimum working voltage will be different. A person skilled in the art can know the minimum working voltage of the secondary power supply conversion circuit 13 adopted through experience or through tests. Combined with FIG. 2, the minimum operating voltage of power transformer T1 and AC-DC power management chip 131 is roughly the lowest working voltage of secondary power supply conversion circuit 13.

If the output voltage of the rectifier circuit 11 is lower than the lower limit value V2 of the preset voltage range, the BOOST unit will start to work to raise the part of the voltage output by the rectifier circuit 11 that is lower than the lower limit value V2 of the preset voltage range.

The BOOST unit 121 can raise the output voltage of the rectifier circuit 11 to a specific value, or the output voltage of the rectifier circuit 11 can be raised by a specific multiple. The BOOST unit includes at least one of BOOST circuit, BUCK/BOOST circuit, charge pump circuit or BUCK circuit. Understandably, BUCK/BOOST circuit and charge pump circuit can realize the function of boosting or reducing voltage according to the need. Any one of BOOST circuit, BUCK/BOOST circuit, charge pump circuit or CUK circuit, or at least two cascades can be used here to increase the boost amplitude.

In at least one embodiment of the present disclosure, the BOOST unit 121 is an uncontrollable circuit. By selecting appropriate parameters of resistance, capacitor, inductance and other components, the start-up threshold can be adjusted. if the working start-up threshold is set to the lower limit value V2 of the preset voltage range, once the output voltage of the rectifier circuit 11 drops to the lower limit value V2 of the preset voltage range, the BOOST unit will be triggered to work.

In another example, the BOOST unit is a controllable circuit. The one-way conduction device included in the BOOST unit is MOS switch. The BOOST unit 121 and the BUCK unit 122 also include a first trigger circuit configured to control the MOS switch on and off, so that the first trigger circuit can trigger the BOOST unit to work or stop working through the MOS switch on and off.

Taking BOOST unit as BOOST circuit as an example, diode can be replaced by MOS switch in BOOST circuit, which makes BOOST circuit a controllable circuit. On the other hand, due to the small voltage drop of MOS switch, replacing the diode in BOOST circuit with MOS switch can also reduce the power loss of BOOST circuit and improve the output voltage of BOOST circuit. For other booster units, for example, the diode in BUCK/BOOST circuit and charge pump circuit can also be replaced by MOS switch.

If the BOOST unit 121 is a controllable circuit, the start and stop time of the BOOST unit can be flexibly set according to the needs, so that the BOOST unit can better cooperate with the rectifier circuit 11 and the secondary power supply conversion circuit 13, so that the voltage processed by the BOOST unit can fully meet the working voltage of the secondary power supply conversion circuit 13.

In at least one embodiment of the present disclosure, the output voltage of the BOOST unit 121, a first capacitor C1 can be set at the input end of the BOOST unit 121. The first end of the first capacitor C1 is connected with the input end of the primary power supply conversion circuit 12, and the second end of the first capacitor C1 is grounded. The first capacitor C1 increases the voltage at the input end of the primary power supply conversion circuit 12 by storing energy, therefore, the stability of the BOOST unit 121 121 is supported, and the output voltage value of the primary winding of the power transformer T1 is stabilized above a fixed value due to the increase of the voltage at the input end of the primary power supply conversion circuit 12 due to the rise of the voltage at the input end of the primary power supply conversion circuit 12, which is conducive to stabilizing the input voltage of the primary winding of the power transformer T1 at a fixed value and reducing the working dead zone of the power transformer T1.

Referring to FIG. 2, in at least one embodiment of the present disclosure, in order to further improve the stability of T1 primary side voltage of power transformer, the primary power supply conversion circuit 12 also includes a BUCK unit 122. The BUCK unit 122 is configured to reduce the output voltage of the rectifier circuit 11 if the output voltage of the rectifier circuit 11 is greater than or equal to the upper limit value V1 of the preset voltage range. wherein, the upper limit value V1 of the preset voltage range is less than the maximum value of the output voltage of the rectifier circuit 11.

If the output voltage of the rectifier circuit 11 is higher than the lower limit value V2 of the preset voltage range, the BUCK unit 122 will start to work to raise the part of the voltage output by the rectifier circuit 11 that is higher than the upper limit value V1 of the preset voltage range.

The BUCK unit 122 may reduce the output voltage of the rectifier circuit 11 to a specific value, or the output voltage of the rectifier circuit 11 may be reduced by a specific multiple. The BUCK unit 122 includes at least one of a BUCK circuit, a BUCK/BOOST circuit, a charge pump circuit, or a CUK circuit. Any one of BOOST circuit, BUCK/BOOST circuit, charge pump circuit or CUK circuit can be used here, or at least two cascades to increase the amplitude of depressurization.

In an embodiment of the present disclosure, the BUCK unit 122 is an uncontrollable circuit, and the starting threshold value of the BUCK unit 122 can be adjusted by selecting appropriate parameters of resistance, capacitor, inductance and other components. If the working starting threshold value is set to the upper limit value V1 of the preset voltage range, once the output voltage of the rectifier circuit 11 rises to the upper limit value V1 of the preset voltage range, the BUCK unit will be triggered to work.

In another embodiment of the present disclosure, the BUCK unit 122 is a controllable circuit. The unidirectional conduction device included in the BUCK unit 122 is a MOS switch. The BUCK unit 122 also include a second trigger circuit for controlling the MOS switch to turn on and off, so that the first trigger circuit can trigger the BUCK unit 122 to work or stop working through the MOS switch.

In this way, the BUCK unit can be replaced by a MOS switch. On the other hand, due to the small voltage drop of MOS switch, replacing the diode in BUCK circuit with MOS switch can also reduce the power loss of buck circuit. For other BUCK unit 122, for example, the diode in BUCK/BOOST circuit and charge pump circuit can also be replaced by MOS switch.

If the BUCK unit 122 is a controllable circuit, the starting and stopping time of the BUCK unit 122 can be flexibly set according to the needs, so that the BUCK unit 122 can better cooperate with the rectifier circuit 11 and the secondary power supply conversion circuit 13.

In at least one embodiment of the present disclosure, in order to further the voltage output of the BUCK unit 122 and a second capacitor C2 can be set at the input end of the BUCK unit 122. The first end of the second capacitor C2 is connected with the input end of the primary power supply conversion circuit 12, and the second end of the second capacitor C2 is to the ground. The second capacitor C2 increases the voltage at the input of the primary power supply conversion circuit 12 by storing energy, thus, the stability of the BUCK unit 122 is supported, and the output voltage of the primary power supply conversion circuit 12 is increased due to the increase of the voltage at the input end of the primary power supply conversion circuit 12, which is conducive to stabilizing the input voltage of the primary winding of the power transformer T1 at a fixed value and reducing the working dead zone of the power transformer T1.

It can be understood that the output waveform of the rectifier circuit 11 may be different according to the different rectifier circuit 11. Therefore, in the present disclosure scheme, only the BOOST unit 121 or the BUCK unit 122 can be used according to the output waveform of the rectifier circuit 11, or the BOOST unit 121 and the BUCK unit 122 can be used at the same time, so as to adjust the output voltage value of the rectifier circuit 11 within the preset voltage range.

It can be understood that power supply circuit 1 is divided into forward circuit and feedback circuit. Accordingly, power transformer T1 can be forward transformer T1 or feedback transformer T1, wherein, forward transformer T1 has higher requirements on voltage stability of transformer T1 primary winding. In at least one embodiment of the present disclosure, through the setting of BOOST unit 121 and BUCK unit 122, the voltage on the primary winding of power transformer T1 is relatively stable, so it is suitable for forward transformer T1 and feedback transformer T1, if power transformer T1 adopts forward transformer T1, the stability of output voltage on negative winding of transformer T1 can be improved, and the power output capacity can be improved, so that the power supply circuit 1 can be used in high-power applications.

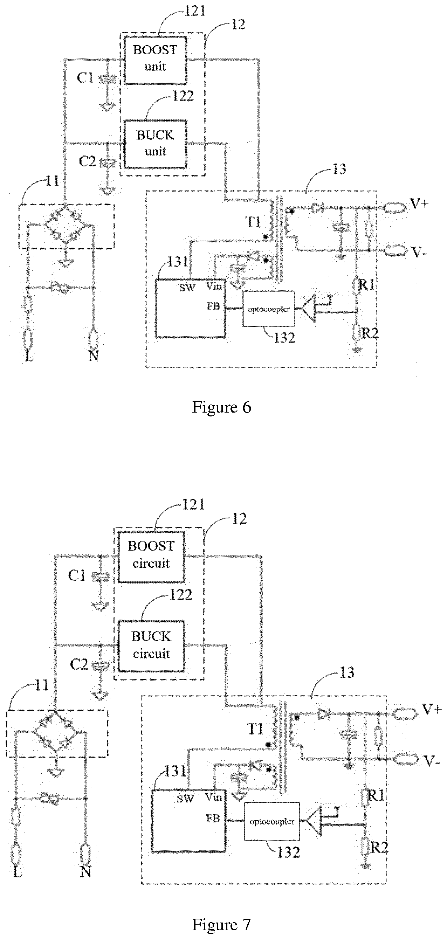

Referring to Fig. 6, in at least one embodiment of the present disclosure, the power supply circuit 1 is configured to a BOOST unit and a BUCK unit 122 at the same time, and the BOOST unit 121 and the BUCK unit 122 are connected in parallel. The BOOST unit121 can be a circuit with only boost function, such as BOOST circuit, BUCK/BOOST circuit, charge pump circuit and so on.

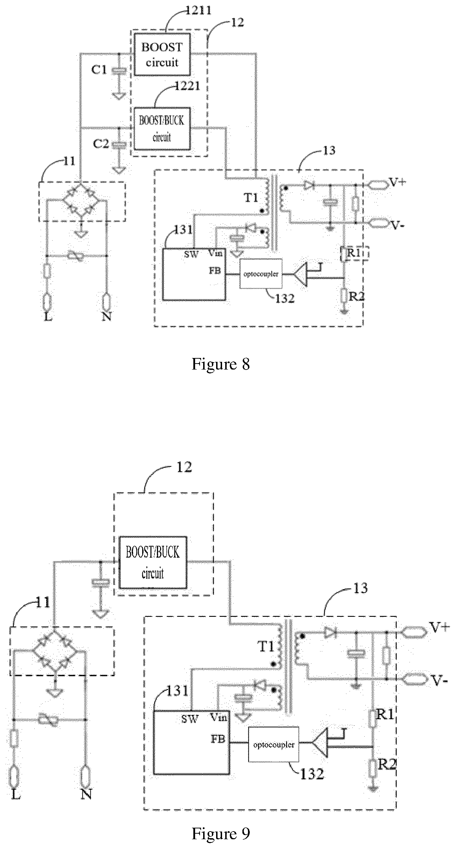

Referring to FIG. 7. In an embodiment of the present disclosure, the BOOST unit 121is a BOOST circuit and the BUCK unit 122 is a BUCK circuit. Referring to Fig. 8, In another embodiment of the present disclosure, the BOOST unit 121 is BOOST circuit and the BUCK unit 122 is BUCK/BOOST circuit. In another embodiment of the present disclosure, the BOOST unit 121is BUCK/BOOST circuit and the BUCK unit122 is BUCK circuit.

Since the optimal operating voltage range of the BOOST circuit and BUCK/BOOST circuit is different from that of the BUCK circuit and BUCK/BOOST circuit, the operating circuit can be selected according to the output voltage of the rectifier circuit11. For example, the efficiency of the BUCK circuit is higher than that of the BUCK/BOOST circuit in a relative high operative voltage range. The BUCK circuit has a high conversion efficiency to convert an input 200V voltage into an output 50V voltage, compared to that of the BUCK/BOOST circuit which converts an input 100 V voltage into an output 50V voltage. Therefore, if the output voltage range of rectifier circuit 11 is about 100V, BUCK/BOOST circuit can be selected.

In an embodiment of the present disclosure, The primary power supply conversion circuit 12 includes at least one of a BUCK/BOOST circuit or a charge pump circuit; the BUCK/BOOST circuit includes a boost unit and a buck unit; the charge pump circuit includes a boost unit and a buck unit; and in the case where the primary power supply conversion circuit 12 includes a BUCK/BOOST circuit and a charge pump circuit, the BUCK/BOOST circuit and the charge pump circuit are connected in parallel.

There are three cases in this disclosure, the primary power supply conversion circuit 12 may include only BUCK/BOOST circuit (as shown in Fig. 9), or only include charge pump circuit, or both BUCK/BOOST circuit and charge pump circuit connected in parallel.

The present disclosure provides a primary power supply conversion circuit 12 to convert an input voltage of the primary power supply conversion circuit out of a preset voltage range into an output voltage of the primary power supply conversion circuit within the preset voltage range, so as to effectively reduce or eliminate the working dead zone of the secondary power supply conversion circuit 13, so that the secondary power supply conversion circuit 13 can obtain sufficient voltage supply on time. Furthermore, the secondary power supply conversion circuit 13 can output a continuous and stable voltage to charge the electronic device.

Moreover, the disclosure can also realize the miniaturization of the charging device. Compared with placing the filter circuit after the rectifier circuit 11 to smooth the output voltage of the rectifier circuit 11, the filter circuit needs to apply the inductance with larger inductance value and the capacitor with larger capacitor value, so the volume of the inductance and capacitor in the filter circuit is larger. In the present disclosure, a power conversion circuit is configured to adjust the output voltage of the rectifier circuit 11. Due to the circuit architecture of the power conversion circuit, the power conversion circuit is able to use inductors with smaller inductance and capacitors with smaller capacitor, thus helping to reduce the size of the inductors and capacitors, which in turn helps to reduce the size of the charging device.

To sum up, the disclosure can improve the stability of the output electric energy of the power supply circuit 1.

While the present disclosure has been described with reference to several embodiments, it should be understood that the terms used are illustrative rather than restrictive. Since the present disclosure can be embodied in various forms without departing from the spirit or essence of the invention, it should be understood that the above embodiments are not limited to any of the foregoing details. Therefore, all changes and modifications falling within the scope of the claims or their equivalent scope shall be covered by the accompanying claims.

## Claims

1. A power supply circuit, comprising:
a rectifier circuit, configured to convert an alternating current inputted to the rectifier circuit into a direct current;
a primary power supply conversion circuit, having an input end connected with an output end of the rectifier circuit, configured to convert an input voltage of the primary power supply conversion circuit out of a preset voltage range into an output voltage of the primary power supply conversion circuit within the preset voltage range;
a secondary power supply conversion circuit, having an input end connected with an output end of the primary power supply conversion circuit, configured to convert a direct current voltage outputted by the primary power supply conversion circuit into a target direct current voltage; wherein, a lower limit of the preset voltage range is greater than a minimum working voltage of the secondary power supply conversion circuit.

2. The power supply circuit of claim 1, wherein
the power supply circuit further comprises a first capacitor; a first end of the first capacitor is connected with the input end of the primary power supply conversion circuit and a second end of the first capacitor is connected to the ground, and wherein the first capacitor is operative to increase a voltage between the output end of the rectifier circuit and the input end of the primary power supply conversion circuit.

3. The power supply circuit of claim 1, wherein
the primary power supply conversion circuit further comprises a BOOST unit, the BOOST unit is operative to convert the input voltage of the primary power supply conversion circuit less than a lower limit of the preset voltage range into the output voltage of the primary power supply conversion circuit within the preset voltage range.

4. The power supply circuit of claim 3, wherein
the BOOST unit comprises at least one of a BOOST circuit, at least one of a BUCK/BOOST circuit, at least one of a charge pump circuit, or at least one of a CUK circuit, or a combination thereof.

5. The power supply circuit of claim 3, wherein
the primary power supply conversion circuit further comprises a BUCK unit, the BUCK unit is operative to convert the input voltage of the primary power supply conversion circuit larger than an upper limit of the preset voltage range into the output voltage of the primary power supply conversion circuit within the preset voltage range;
wherein, the upper limit of the preset voltage range is less than the maximum value of the output voltage of the rectifier circuit.

6. The power supply circuit of claim 5, wherein
the BUCK unit comprises one or a combination of: at least one of a BUCK circuit, at least one of a BUCK/BOOST circuit, at least one of a charge pump circuit, or at least one of a CUK circuit.

7. The power supply circuit of claim 5, wherein
the BOOST unit is connected in parallel with the BUCK unit.

8. The power supply circuit according to claim 5, wherein
an unidirectional conduction device included in the BOOST unit is a MOS switch; the BOOST unit and the BUCK unit also include a first trigger circuit configured to turn on or off the MOS switch;
The unidirectional conduction device included in the BUCK unit is the MOS switch; the BUCK unit also includes a second trigger circuit configured to turn on or off the MOS switch.

9. The power supply circuit according to claim 8, wherein
the first trigger circuit is configured to control the BOOST unit to start or stop working by controlling the MOS switch;
The second trigger circuit is configured to controls the BUCK unit to start or stop working by controlling the MOS switch.

10. The power supply circuit according to any one of claims 1 to 9, wherein
the secondary power supply conversion circuit comprises a transformer, a power management chip, and a feedback circuit; and wherein the power management chip having a switch control end and a feedback end;
a first end of a primary winding of the transformer is connected with an output end of the primary power supply conversion circuit, and a second end of the primary winding of the transformer is connected with the switch control end of the power management chip; and wherein
an input end of the feedback end is connected with the primary winding of the transformer or a secondary winding of the transformer, and an output end of the feedback end is connected with the feedback end of the power management chip.

11. The power supply circuit according to claim 10, wherein
the feedback circuit is operative to detect a voltage of the primary winding or the secondary winding of the transformer, and transmit the detected voltage to the power management chip; and
the power management chip is configured to adjust a voltage duty cycle of the primary winding of the transformer according to the detected voltage detected by the feedback circuit.

12. A charging device, comprising:
a power supply access port and a power supply circuit, the power supply access port configured to input alternating current, and an output end of a secondary power supply conversion circuit of the power supply circuit connected with the device to be charged; the power supply circuit comprising:
a rectifier circuit, configured to convert an alternating current inputted to the rectifier circuit into a direct current;
a primary power supply conversion circuit having an input end connected with an output end of the rectifier circuit, configured to convert an input voltage of the primary power supply conversion circuit out of a preset voltage range into an output voltage of the primary power supply conversion circuit within the preset voltage range;
a secondary power supply conversion circuit having an input end connected with an output end of the primary power supply conversion circuit, configured to convert a direct current voltage outputted by the primary power supply conversion circuit into a target direct current voltage; wherein, a lower limit of the preset voltage range is greater than a minimum working voltage of the secondary power supply conversion circuit.

13. The charging device according to claim 12, wherein
the power supply circuit further comprises a first capacitor; a first end of the first capacitor is connected with the input end of the primary power supply conversion circuit and a second end of the first capacitor is connected to the ground, and wherein the first capacitor is operative to increase a voltage between the output end of the rectifier circuit and the input end of the primary power supply conversion circuit.

14. The charging device according to claim 12, wherein
the primary power supply conversion circuit further comprises a BOOST unit, the BOOST unit is operative to convert the input voltage of the primary power supply conversion circuit less than a lower limit of the preset voltage range into the output voltage of the primary power supply conversion circuit within the preset voltage range.

15. The charging device according to claim 14, wherein
the primary power supply conversion circuit further comprises a BUCK unit, the BUCK unit is operative to convert the input voltage of the primary power supply conversion circuit larger than an upper limit of the preset voltage range into the output voltage of the primary power supply conversion circuit within the preset voltage range;
wherein, the upper limit of the preset voltage range is less than the maximum value of the output voltage of the rectifier circuit.

16. The charging device according to claim 15, wherein
the BOOST unit is connected in parallel with BUCK unit.

17. The charging device according to claim 15, wherein
an unidirectional conduction device included in the BOOST unit is a MOS switch; the BOOST unit and the BUCK unit also include a first trigger circuit configured to turn on or off the MOS switch;
The unidirectional conduction device included in the BUCK unit is the MOS switch; the BUCK unit also includes a second trigger circuit configured to turn on or off the MOS switch.

18. The charging device according to claim 17, wherein
the first trigger circuit is configured to control the BOOST unit to start or stop working by controlling the MOS switch;
The second trigger circuit is configured to controls the BUCK unit to start or stop working by controlling the MOS switch.

19. The charging device according to any one of claims 12 to 18, wherein
the secondary power supply conversion circuit comprises a transformer, a power management chip, and a feedback circuit; and wherein the power management chip having a switch control end and a feedback end;
a first end of a primary winding of the transformer is connected with an output end of the primary power supply conversion circuit, and a second end of the primary winding of the transformer is connected with the switch control end of the power management chip; and wherein,
an input end of the feedback end is connected with the primary winding of the transformer or a secondary winding of the transformer, and an output end of the feedback end is connected with the feedback end of the power management chip.

20. The charging device according to claim 19, wherein
the feedback circuit is operative to detect a voltage of the primary winding or the secondary winding of the transformer, and transmit the detected voltage to the power management chip; and
the power management chip is configured to adjust a voltage duty cycle of the primary winding of the transformer according to the detected voltage detected by the feedback circuit.
